Europäisches Patentamt

European Patent Office

Office européen des brevets

(19)

(11) Publication number: **0 084 956**
A2

(12)

# EUROPEAN PATENT APPLICATION

(21) Application number: 83300280.1

(22) Date of filing: 20.01.83

(51) Int. Cl.³: **G 05 B 19/42**, G 05 B 19/405, B 25 J 9/00

(30) Priority: 21.01.82 JP 7838/82

(43) Date of publication of application: 03.08.83 Bulletin 83/31

(84) Designated Contracting States: DE FR GB

(71) Applicant: Fanuc Ltd, 5-1, Asahigaoka, 3-chome, Hino-shi, Tokyo 191 (JP)

(72) Inventor: Inaba, Hajimu, 5-3-16 Asahigaoka, Hino-shi Tokyo (JP)
Inventor: Hiraizumi, Mitsuo, 581-16 Kitano-machi, Hachioji-shi Tokyo (JP)

(74) Representative: Billington, Lawrence Emlyn et al, HASELTINE LAKE & CO Hazlitt House 28 Southampton Buildings Chancery Lane, London WC2A 1AT (GB)

(54) Robot control method and system.

(57) A method and system for monitoring operating state in the control of a robot for actuating a robot hand (1) in accordance with taught data to cause the hand (1) to grip a part (BT) and then service a mate (PB) with the part (BT) in a playback mode. The method includes a step of teaching an operating state by actuating the robot arm or hand in accordance with the taught data and storing in a memory information indicative of a reference state based on an output signal from sensing means (SA, SB) for sensing the state of an operation performed by the robot hand (1). The next step is to monitor the operating state of the robot hand (1) in the playback mode by comparing an output signal from the sensing means (SA, SB) with the reference state stored in the memory.

0084956

## ROBOT CONTROL METHOD AND SYSTEM

This invention relates to a robot control method and system for controlling a robot in accordance with previously stored data indicative of taught operations.

The rising cost of labor has given rise to a demand for labor-saving measures and for improvement in work procedures. Industrial robots have been put into use to meet this demand and have been very successful in doing so. Particularly outstanding results have been achieved in plants having numerous machine tools where industrial robots are used to perform such simple services as changing the workpieces and tools associated with each machine tool, as well as complicated services such as assembling parts. The demand for such robots has grown yearly.

Playback-type robots are widely employed as industrial robots of the above-described type. With such playback-type industrial robots, a teaching box teaches the necessary service operations in advance, and the taught data (referred to as robot command data hereinafter) is stored in memory within a control unit.

Whenever a request for a service arrives from a machine tool, a series of the above robot command data is read out of the memory sequentially, and the robot responds by servicing the machine in repeated fashion.

The robot command data comprises point information regarding a point at which a service is to be performed, robot operating speed, and service codes which indicate control of the hand at the point and which instruct also the exchange of signals with the machine tool side, and the like. In general, the teaching operation mentioned above proceeds in the following order: (1) set a memory address at which an item of robot command data is to be stored; (2) position the robot at the service point by a jog-feed (manual feed); (3) set the positional information regarding the point, as well as the magnitude of the speed command; and 4) set the robot service code. A series of robot operations for a machine tool is taught by repeating the sequence (1) through (4).

Accordingly, as long as there are no problems with the mechanism or control system of the robot, the robot will be positioned at the predetermined operating speed in accordance with the robot command data each time a service is requested, after which the robot will sequentially and correctly execute such services as workpiece exchange, cleaning of machining scraps and control of the hand.

With a robot of the type described, however, there

0084956

is no assurance that the robot hand will always grip a part or workpiece in precisely the same manner, so that such robots are unsuitable for fitting operations that require accuracy. Problems are also encountered in cases where a part of a designated kind is to be picked up from/various parts of kinds in order to be transferred to the robot partner, such as a machine tool. In such cases a part of a similar shape is likely to be picked up by the hand, so that the robot is ill-fitted for selecting parts of the same shape.

Thus, while a conventional robot is capable of picking up a part with its hand, positioning the part at a predetermined point in accordance with taught data and executing a desired activity with respect to a partner, there is no assurance that the activity is being performed in a normal manner. For this reason, the conventional robots are utilized solely for simple activities which do not require accuracy.

According to one aspect of the invention there is provided a robot control method for actuating a robot hand in accordance with taught data stored in a memory to cause said hand to grip a part and then service a mate with said part in a playback mode, comprising the steps of:

(a) teaching an operating state by actuating said robot hand in accordance with the taught data and storing in said memory information indicative of a reference state based on an output signal from sensing

0084956

means for sensing the state of an operation performed by said robot hand, and

(b) monitoring the operating state of said robot hand prevailing in the playback mode by comparing, in the playback mode, an output signal from said sensing means with the information stored in said memory.

According to another aspect of the invention there is provided a robot control system which includes a robot having a hand and a robot control unit having a memory for storing taught data, the robot control unit controlling/the robot in accordance with taught
when in use,
data stored in the memory, whereby the robot hand is caused to grip a part and then service a mate with said part, which robot control system comprises:

sensing means for sensing the state of an operation performed by the hand;

storage means for storing the magnitude of an output obtained from said sensing means as an operation is performed by the hand in accordance with the taught data when the robot control unit is in an operating state teach mode; and

comparison means for comparing the magnitude of an output obtained from said sensing means when the
in
robot control unit is/a playback mode, with the output magnitude stored in said storage means thereby to monitor the operating state of the hand.

An example of the present invention may provide a robot control method and system capable of

-5-

0084956

monitoring an activity performed by a robot hand, possibly the handling of a part by a robot hand.

An example of the present invention may provide a robot control method and system capable of readily sensing whether an activity performed by a robot hand is proceeding normally or abnormally, possibly regardless of the size of a part being grasped by the robot hand.

An example of the present invention may provide a robot control method and system capable of assuring that a part grasped by a robot hand will be mounted on or fit in an accompanying part or machine in correct fashion.

An example of the present invention may provide a method and system for robot control wherein sensing means for sensing the operating state of a robot hand are provided on the hand, on a part or machine accompanying the robot hand, or at a predetermined point in the immediate work area for the purpose of obtaining reference values indicative of the correct operating state. Specifically, the robot / may be placed in an operating state teach mode to cause the robot hand to execute an activity, just as in an actual operation, in accordance with taught data, and the magnitude of an output signal from the sensing means obtained in the operating state teach mode / may be stored in memory as reference state information. Then, with the robot placed in the playback mode of operation, the magnitude of the sensor output signal obtained at such time may be compared with the reference state information in said memory to monitor the operating state. This makes it possible to readily sense any abnormality in the operating state so that robot activities may proceed safely without any risk of damage to the hand, a gripped part,/a mating part or the robot mate, such as a machine tool.

Features and advantages of/the present invention will be apparent from the following description taken in conjunction with the accompanying drawings, in which like reference characters designate the same or similar parts throughout the figures thereof, and in which:

Figs. 1A and 1B are plan and side views, respectively, of an exemplary industrial robot to which the present invention appertains;

Fig. 2 is a schematic view illustrating/an embodiment of the present invention;

Fig. 3 is a schematic view illustrating/another embodiment of the present invention;

Fig. 4 is a schematic view illustrating/a further embodiment of the present invention;

Fig. 5 is a block diagram of an embodiment for practicing the present invention; and

Fig. 6 is an explanatory view useful in describing the data stored in a memory in the block diagram of Fig. 5.

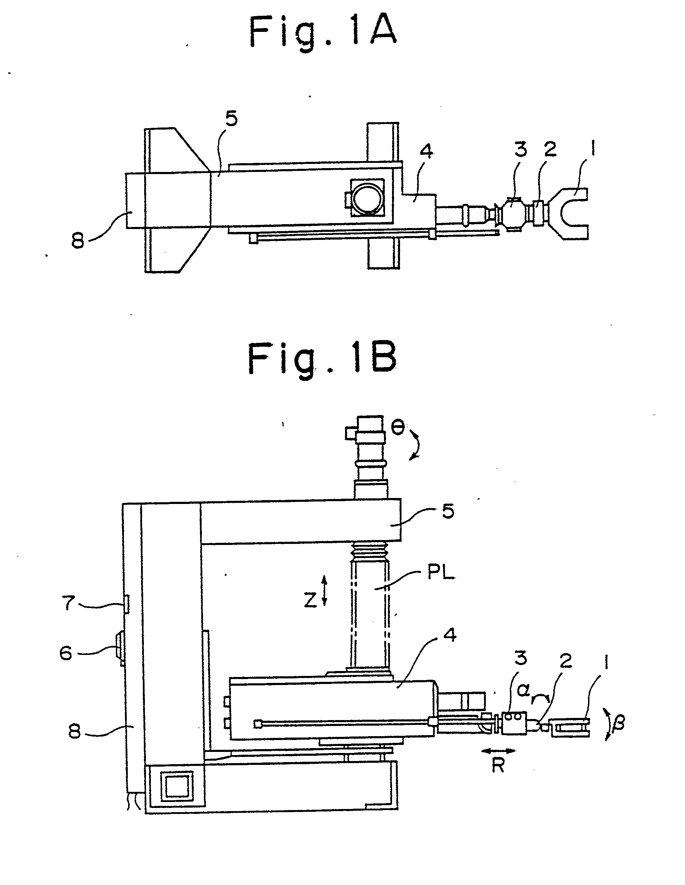

Referring to Figs. 1A and 1B showing an industrial robot to which the present invention may be applied, numeral 1 denotes a mechanical hand for gripping, e.g., a workpiece when, say, it is to be exchanged. A wrist 2, connected at one end to the hand 1, is capable of being swiveled ($\alpha$-axis) and bent up and down ($\beta$-axis). The wrist 2 is connected at the other end thereof to an arm 3 which can be freely extended and retracted (R-axis). A casing 4 receiving the arm 3 can be moved vertically (Z-axis) along a rotary shaft PL and rotated about the shaft PL ($\theta$-axis). Numeral 5 denotes a frame, and 6 a teaching box 6 for teaching robot motions. An operator's panel 7 is provided for manipulation by the operator, as well as a control unit 8 for storing, in succession, the data taught by the teaching box 6, such as operating positions (points), operating speed and the various services, and for controlling the motion of the mechanical hand 1, wrist 2, arm 3 and casing 4 in accordance with the taught data.

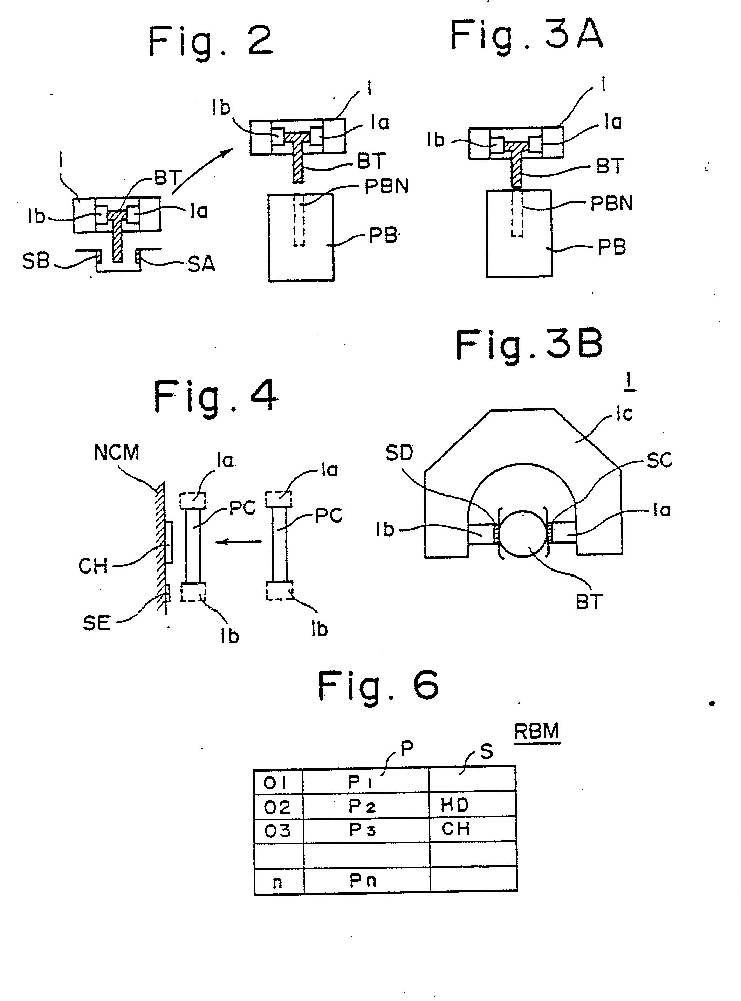

Referring now to Fig. 2 showing part of /an embodiment of the present invention, a robot hand 1 is provided with fingers 1a, 1b at the distal end thereof for gripping a part BT by embracing it from the sides. The hand 1 is moved through the combination of the wrist 2, arm 3 and casing 4, not shown in Fig. 2 , to which it is connected.    The part BT in the illustrated embodiment has a
T-shaped configuration, such as a bolt, the shaft
portion whereof is to be fitted by the robot hand into
a bore PBN formed in a mate, namely in a part PB.   SA
and SB denote proximity switches, serving as sensing
means, so provided as to oppose each other.
Fig. 2 shows the fingers 1a, 1b of the hand 1 gripping
the head portion of the part BT, which has been lifted
from a work table (not shown), and shows the shaft
portion of the part BT as it is about to be fit into
the bore PBN of the part PB. It will be appreciated
that the part BT cannot be fit into the bore PBN unless
the hand 1 grips the part PB correctly, no matter how
precisely the hand 1 is positioned relative to the part
PB upon being driven in accordance with the taught
data.   For example, if the hand 1 is tilted even
slightly when it grips the part BT, the latter will not
fit into the bore PBN.   In accordance with the present
invention, therefore, means are provided for sensing
the operating condition of the hand 1, namely the
manner in which the hand grips the part BT, in order
that a decision can be made as to whether an
abnormality exists.   Specifically, in the illustrated
embodiment, after the hand grips the part BT, the hand
is transported to and positioned at a measurement point
and then is positioned at the location of the part PB.
The sensing means, namely the proximity switches SA,
SB, are provided in an opposing relation at the measurement point, and the hand 1, gripping the part BT, is positioned in such a manner that the part BT is brought into position between the switches SA, SB. Thus, whether the part BT is being gripped askew may be decided based on output signals from the switches SA, SB. Each of the proximity switches SA, SB is so designed that the magnitude of the output signal produced thereby varies in proportion to the distance from an approaching object. Monitoring the magnitude of these output signals will permit the attitude of the part BT to be judged.

Since the gripping operation performed by the hand 1 is a mechanical operation, the gripping state will differ depending upon the shape of the hand 1 and the shape of the part BT, making it difficult to decide uniquely defined reference values for the purpose of sensing the tilted attitude of the part.

After a teaching operation is completed, the robot hand is submitted to a trial operation and made to perform an actual fitting activity once in accordance with the taught data, at which time the magnitudes of the output signals produced by the proximity switches SA, SB are stored in memory as information indicative of a reference state, i.e., as reference values. Then, in the execution of actual activities performed subsequently, the stored values serve as a basis of comparison with respect to the outputs obtained from the switches SA, SB at such

0084956

time. To be more specific, the robot is made to perform an activity in accordance with the taught data while gripping the part BT, whereby output signals of magnitudes $\alpha_r$, $\beta_r$ are produced by the proximity switches SA, SB. The magnitudes of these signals are stored in memory as information indicative of a reference state. In an actual succeeding operation, the switches SA, SB produce outputs $\alpha_n$, $\beta_n$ that are compared in magnitude with the values $\alpha_r$, $\beta_r$ in memory. When the difference between the compared values is greater than a predetermined value, a decision is rendered to the effect that the gripped part is tilted in excess of an allowable degree of tilt, in response to which the hand 1 is made to forgo the operation of fitting the part BT in the part PB and is commanded to release the part. The hand then grips the next part and repeats the foregoing operations.

The measurement point where the proximity switches SA, SB are situated may be located anywhere along the path over which the hand 1 transfers the part BT from the gripping location to the position of the part PB. There is no need to provide the point at a location remote from the transfer path. Further, the measurement performed at the measurement point may be used to judge not only the tilt of a part but also the length, or displacement, of a part. For this purpose, means such as photoelectric sensors may be provided. In cases where it is desired to judge tilt or length based

0084956

on contact rather than proximity, the sensing means may comprise contact sensors.

Fig. 3 is a view useful in describing part of/another embodiment of the present invention. Here pressure sensors SC, SD are provided on the respective fingers 1a, 1b of the hand 1 itself so that no measurement point need be provided. In operation, the sensors SC, SD sense any application of pressure as the hand is actually in the progress of fitting the part BT in the bore PBN of the part PB. As described above in connection with the arrangement of Fig. 2, the hand is made to perform the activity in accordance with the taught data. When the robot succeeds in fitting the parts together, the prevailing magnitudes $\alpha_r$, $\beta_r$ of the output signals produced by the pressure sensors SC, SD at such time are stored in memory as information indicative of a reference state. In an actual succeeding operation, the sensors SC, SD produce outputs $\alpha_n$, $\beta_n$ that are compared in magnitude with the reference values $\alpha_r$, $\beta_r$ in memory. When the difference between the compared values is greater than a predetermined value (inclusive of zero), a decision is rendered to the effect that the fitting operation is improper, in response to which the operation is cancelled. For example, if the part BT is gripped at a tilted attitude by the hand 1 in Fig. 3A, the hand will not be able to fit part BT in the bore PBN of part PB. In such a situation, the fingers 1a, 1b of the hand are subjected to a pressure during the fitting operation that is greater than that applied when the operation proceeds normally, so that one or both of the output signal magnitudes $\alpha_n$, $\beta_n$ from the pressure sensors SC, SD will be larger than the corresponding reference values $\alpha_r$, $\beta_r$. Thus, comparing the pressure sensor outputs with the reference values renders a decision to the effect that the fitting operation is improper. It will also be seen that the magnitudes of the sensor outputs will exceed the reference values, indicating an abnormal fitting operation, if, for some reason, there is incorrect registration between the position of the hand 1 and the position of the bore PBN in part PB during the fitting work. This will preclude damage to both the parts and the hand should the conditions for fitting be improper. Note that the arrangement of Fig. 3 may be applied not only to the fitting together of parts but also to the loading and unloading of workpieces relative to a chuck provided on a machine tool or other mate.

Fig. 4 is useful in describing still another embodiment of the present invention and shows a workpiece PC gripped by the fingers 1a, 1b of the hand 1 as it is being loaded into a chuck CHK on a machine tool NCM which is the robot mate. Here a proximity switch SE is provided on the surface of the machine tool NCM where the workpiece is to be loaded, and is adapted to sense the attitude of the approaching finger

1b of hand 1. As with the embodiments of Figs. 2 and 3, the robot is made to perform a trial loading operation once on the basis of the taught data, at which time the prevailing magnitude of the output signal from the proximity switch SE is stored in memory as the referential information $\alpha_r$. The output magnitude $\alpha_n$ from the switch SE obtained during an actual subsequent loading operation is compared with $\alpha_r$ so that a judgment can be made regarding the accuracy of the operation. Alternatively, a pressure sensor may be provided on or near the chuck CH to sense the pressure applied to the chuck when the workpiece PC is loaded.

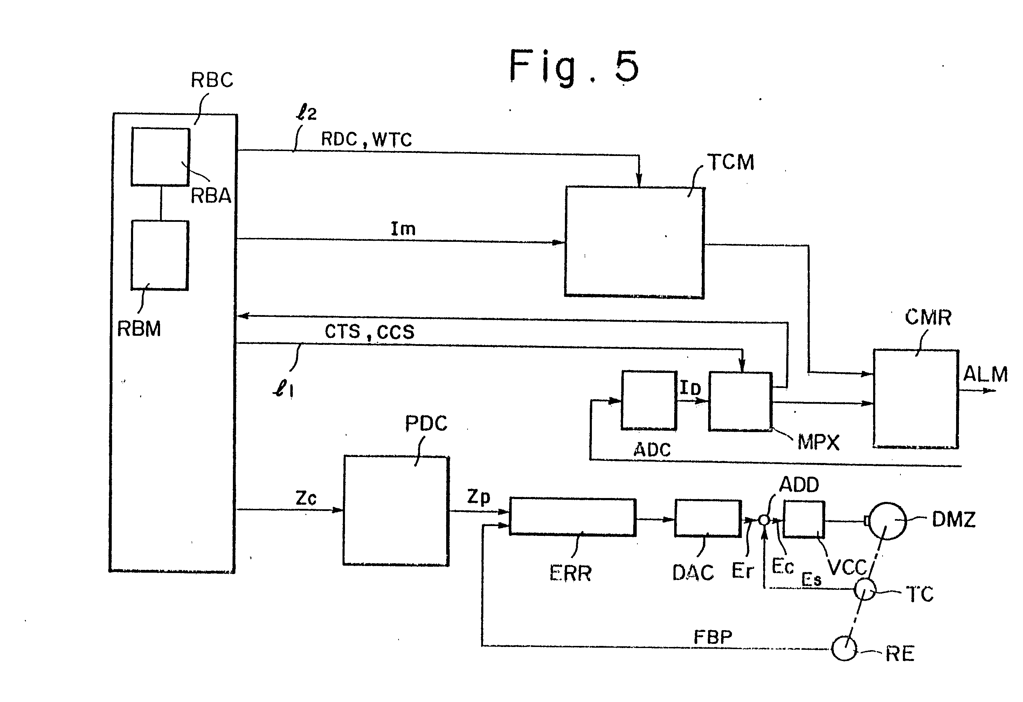

A block diagram for realizing a robot control method in accordance with the present invention is illustrated in Fig. 5. A robot controller RBC constituted by a microcomputer is provided with an arithmetic unit RBA and a memory RBM for storing, e.g., taught data and a control program, and is adapted to control a robot by exchanging signals with a machine tool. The taught data storage area of the memory RBM has the configuration shown in Fig. 6, in which positional information areas P and service code areas S are allotted in accordance with memory addresses "01" to "n". Positions to be assumed by the hand 1 and hand operating speeds are stored in the P areas, while a grip instruction HD, a check instruction CH, and various instructions such as a release instruction and instructions for communication with the machine tool, are stored in the S areas. The check instructions are inserted beforehand at suitable ones of the service code areas. In other words, a check instruction is inserted as a robot service code at the address of a taught data item corresponding to the robot hand position at which that status of an activity is desired to be checked. In the example of Fig. 6, a check is to be executed at the position indicated by positional information area P3.

Returning to Fig. 5, a pulse distributing circuit PDC receives a Z-axis move command Zc from the robot controller RBC in accordance with the position and speed information stored in the memory RBM, and performs an arithmetic pulse distributing operation based on the magnitude of Zc to produce command pulses Zp of a number corresponding to the magnitude of Zc. The command pulses Zp are applied to an error register ERR which also receives feedback pulses FBP each of which is generated whenever a motor DMZ, to be described later, rotates through a predetermined angle. The error register ERR is adapted to count up or to count down the command pulses Zp and feedback pulses FBP in accordance with the direction of robot (motor) movement. More specifically, assume robot movement along the Z-axis in the positive direction. In such case the content of error register ERR will be up-counted by one count each time a command pulse Zp is

0084956

generated, and will be down-counted by one count each time a feedback pulse FBP is produced. Conversely, for movement along the Z-axis in the negative direction, the content of error register ERR is counted down by one count each time a command pulses Zp is generated, and counted up each time a feedback pulse FBP is generated. Thus the information stored in the error register ERR always represents the difference between the number of command pulses Zp and the number of feedback pulses FBP. The error register ERR produces a digital error signal indicative of this difference. A digital-to-analog (DA) converter DAC receives the digital signal from the error register ERR and executes a DA conversion to produce an analog positional offset voltage Er which is proportional to the input digital signal, that is, to the content of the error register ERR. An adding/subtracting circuit ADD produces a differential voltage Ec by computing the difference between the positional offset voltage Er and an actual speed voltage which is proportional to the actual speed of the motor DMZ. A speed control circuit VCC, which receives the voltage differential Ec from the adding/subtracting circuit ADD, includes such circuitry (not shown) as a phase compensating circuit, thyristor phase control circuit and thyristor circuit, and is adapted to control the motor speed in such a manner that the voltage differential Ec approaches zero. Specifically, the thyristor phase control circuit advances or retards the thyristor firing phase in accordance with the magnitude of the voltage differential Ec, thereby regulating the voltage applied to the motor to control the rotational speed thereof. The motor DMZ referred to above is a DC motor for Z-axis drive and receives the regulated voltage from the speed control circuit VCC. A tachogenerator TC is coupled directly to the DC motor shaft and produces the actual speed voltage Es whose amplitude is proportional to the actual rotational speed of the DC motor DMZ. A sensor RE, such as a rotary encoder or resolver, generates one feedback pulse FBP each time the DC motor DMZ rotates by a predetermined angle.

ADC denotes an analog-to-digital (AD) converter which receives the output signals produced by the switches SA, SB or by the sensors SC, SD, SE for converting the magnitude of the received signal into a digital value $I_D$. MPX designates a multiplexer which receives the digital signal $I_D$ from the AD converter ADC. When the robot controller RBC delivers a teach signal CTS in the teach mode of operation, the multiplexer MPX transmits the digital sensor or switch output $I_D$ to the robot controller RBC. On the other hand, when the robot controller RBC sends a signal indicative of a check instruction CCS to the multiplexer MPX during the performance of a robot service, the digital signal $I_D$ is applied to a comparator CMR that will be described below. Upon receiving the digital signal $I_D$ indicative of the switch or sensor output, the robot controller RBC processes the signal in a predetermined manner and, using the arithmetic unit RBA, computes an allowable limit value $I_m$ determinative of a normal operating state. This value, namely the upper limit of the switch or sensor output, is written into a predetermined address of the memory TCM by a write command WTC, and is read out from the predetermined address by a read command RDC. The commands WTC, RDC are issued by the robot controller RBC. During the performance of a robot service, the robot controller RBC issues the state check signal CCS, the multiplexer MPX issues the digital signal $I_D$ indicative of the switch or sensor output, and the memory TCM delivers the limit value as signal Im, with Im and $I_D$ being applied to the comparator CMR where they are compared. When the magnitude of $I_D$ is found to exceed the limit value, the comparator CMR issues an alarm signal ALM.

In the operation of the apparatus of Fig. 5, the robot controller RBC first is taught the required robot motions in the ordinary manner. Specifically, the items of taught robot data are written into the memory RBM as shown in Fig. 6. Next, the robot is caused to execute an activity based on the taught data in order to obtain the reference information indicative of the operating state, such as the above-described information indicating that a part is being gripped in

a correct manner. This is referred to as an operating state teach mode. Thus, when a command indicative of this mode of operation is applied to the robot controller RBC, the robot controller RBC behaves just as if an actual robot service were to be performed. In other words, the robot controller RBC produces the Z-axis movement command Zc in accordance with the taught data in memory RBM, and the pulse distributor PDC performs an arithmetic pulse distribution operation to deliver the distributed command pulses Zp. The error register ERR counts the distributed pulses Zp up or down in accordance with the direction of robot movement, sending the resulting counted value to the DA converter DAC which converts this value into the positional offset voltage Er. The analog voltage Er is impressed upon the motor DMZ through the adding/subtracting circuit ADD and speed control circuit VCC, thereby driving the motor DMZ into rotation. As the motor DMZ rotates, the tachometer TC produces the actual speed voltage Es, and the sensor RE generates one feedback pulse FBP each time the DC motor DMZ rotates by a predetermined angle. The feedback pulses FBP enter the error register ERR which from now on delivers the arithmetic difference between the command pulses Zp and the feedback pulses FBP. The difference, namely the content of the error register, is converted into the voltage Er. Next, adding/subtracting circuit ADD computes the voltage differential Ec, namely the deviation from the actual speed voltage Es. The motor DMZ rotates is accordance with the voltage differential Ec, so that the robot is transported toward the target position along the Z-axis at the commanded speed. In other words, the robot, in accordance with the taught data, is moved successively toward the target position and executes the predetermined service.

When a check instruction CH is read from the taught data in memory RBM under these conditions, the arithmetic unit RBA of the robot controller RBC first issues the teach signal CTS, in response to which it receives the digital value $I_D$, indicative of the switch or sensor output, via the multiplexer MPX. Next, the arithmetic unit RBA subjects the digital value $I_D$ to predetermined processing to obtain the limit value Im, which is then stored in the memory TCM. With the arrangement of Fig. 2, the output signals produced by both switches SA, SB are read in by the robot controller after the positioning operation at the measurement point. Thereafter, robot drive, positioning and, e.g, the fitting together of parts, take place in accordance with the item of taught data at the next address of the memory RBM. With the arrangement of Fig. 3, the outputs of sensors SC, SD are read in during the performance of the fitting operaiton. With Fig. 4, the output of sensor SE is read in during the performance of the loading activity. Thus, what is essential is that a check instruction CH be inserted in the taught data at a location corresponding to a predetermined positioning point. If this is done, then the switch or sensor output relating to the particular service at the point will be read into the robot controller RBC.

On the other hand, during control of the robot in an actual operation (i.e., in the playback mode of operation), the robot is likewise driven and controlled in accordance with the taught data. Now when the check instruction CH is read from the taught data, the arithmetic unit RBA of the robot controller RBC delivers the read command RDC on line $\ell_2$, in addition to the check signal on line $\ell_1$. As a result, the predetermined limit value Im is delivered by the memory TCM, and the digital value $I_D$ is delivered by the multiplexer MPX, these values being fed into the comparator CMR which checks to determine whether the value $I_D$ exceeds the value Im. When this is indeed the case, the comparator CMR sends the alarm signal ALM to the robot controller RBC, in response to which the robot controller causes the hand 1 to release a gripped part, halts the movement of the hand, or causes the hand to begin a subsequent gripping operation.

It should be noted that the description in conjunction with Fig. 5 relates to the Z-axis only. In practice, however, control is similarly effected for the other axes (R-axis, $\theta$-axis) as well. Furthermore, it has been described that the limit value is stored in

0084956

the memory TCM. By providing a limit value arithmetic unit at the output side of the memory TCM and implementing the operation state teach mode a plurality of times, however, the average value or maximum and minimum values can be computed and stored in memory. In the above arrangement, the memory TCM, comparator CMR and the like have been descried as being located outside of the robot controller RBC. However, the robot controller, being constituted by a microcomputer, can be made to perform the functions of these units and can be adapted to store the limit value along with the taught data.

In accordance with the/present invention as described and illustrated hereinabove, sensing means for sensing the operating state of a robot hand are provided on the hand, on a part or machine accompanying the robot hand, or at a predetermined point in the immediate work area for the purpose of obtaining reference values indicative of the correct operating state. Specifically, the robot is placed in an operating state teach mode to cause the robot hand to execute an activity, just as in an actual operation, in accordance with taught data, and the magnitudes of output signals from the sensing means obtained in the operating state teach mode are stored in memory as reference state information. Then, with the robot is placed in the playback mode of operation, the magnitudes of the sensor output signals obtained at such time are compared with the reference state information in said memory to monitor the operating state. This makes it possible to readily sense any abnormality in the operating state so that robot activities may proceed safely without any risk of damage to the hand, a gripped part, a mating part or the robot mate, such as a machine tool. It is also possible to readily sense runaway of the robot if the robot should malfunction. Since the reference state information is set based on the single performance of an actual robot activity in accordance with the operating state teach mode, the normality of an activity is sensed in an accurate manner and the information is set in a very easy manner.

As many apparently widely different embodiments of the present invention can be made without departing from the spirit and scope thereof, it is to be understood that the invention is not limited to the specific embodiments thereof except as defined in the appended claims.

-24-                                    0084956

CLAIMS:

1.    A robot control method for actuating a robot hand in accordance with taught data stored in a memory to cause said hand to grip a part and then service a mate with said part in a playback mode, comprising the steps of:

(a)   teaching an operating state by actuating said
robot arm/in accordance with the taught data and
      or hand
storing in said memory information indicative of a reference state based on an output signal from sensing means for sensing the state of an operation performed by said robot hand, and

(b)   monitoring the operating state of said robot hand prevailing in the playback mode by comparing, in the playback mode, an output signal from said sensing means with the information stored in said memory.

2.    The robot control method according to claim 1, in which step (a) includes the step of sensing the gripped state of said part as the state of the operation performed by said robot hand.

3.    The robot control method according to claim 1/ in
                                                or 2
which step (b) is executed in response to the reading of a check instruction contained in said taught data.

4.    The robot control method according to/claim   , in
                                          any preceding
which step (a) includes the steps of:

sensing the state of said operation based on the output signal from said sensing means;

computing an allowable limit value based on the output signal from said sensing means; and

storing said allowable limit value in said memory.

5. The robot control method according to/claim , in
which step (b) includes the steps of:

reading the output signal, obtained from said sensing means, indicative of the state of said operation, and

comparing the read output signal with the information stored in said memory.

6. The robot control method according to any/ , in
which step (b) is executed after said robot hand grips
said part and before said robot hand services said
mate.

7. The robot control method according to any / , in
which step (b) is executed while said robot hand is
servicing said mate.

8. A robot control system which includes a robot
having a hand and a robot control unit having a memory
for storing taught data, the robot control unit
controlling/the robot in accordance with taught data
stored in the memory, whereby the robot hand is caused
to grip a part and then service a mate with said part,
which robot control system comprises:

sensing means for sensing the state of an operation performed by the hand;

storage means for storing the magnitude of an output obtained from said sensing means as an operation is performed by the hand in accordance with the taught data when the robot control unit is in an operating state teach mode; and

comparison means for comparing the magnitude of an output obtained from said sensing means when the robot control unit is/a playback mode, with the output magnitude stored in said storage means thereby to monitor the operating state of the hand.

9.    A robot control system according to claim 8, in which said storage means and said comparison means are provided in the robot control unit.

10.    A robot control system according to claim 8/, in which said sensing means senses the conditions under which the part is gripped by the hand as said operating state.

11.    A robot control system according to claim 8,/in which the robot control unit stores, in the operating state teach mode, the magnitude of said output in said storage means in response to reading a check instruction inserted in the taught data, and causes said comparison means to perform said comparison operation in the playback mode in response to reading a check instruction inserted in said taught data.

12.    A robot control system according to any of/ in which the robot control unit computes an allowable limit value from the magnitude of said output and stores the allowable limit value in said storage means as said magnitude.

13.    A robot control system according to claim  8,

0084956

or any of claims 9 to 12 when appended to claim 8, in which said sensing means is provided at a predetermined measurement point for sensing the position of a part gripped by the hand.

14.     A robot control system according to claim 8, or any of claims 9 to 12 when appended to claim 8, in which said sensing means is provided on the hand.

15.     A robot control system according to claim 8, or any of claims 9 to 12 when appended to claim 8, in which said sensing means is provided on the mate.

# Fig.1A

# Fig.1B

# Fig. 2

# Fig. 3A

# Fig. 4

# Fig. 3B

# Fig. 6

RBM

| | P | S |
|---|---|---|
| O1 | P1 | |
| O2 | P2 | HD |
| O3 | P3 | CH |
| | | |
| n | Pn | |

# Fig. 5